# EUROPEAN PATENT SPECIFICATION

(11) **EP 3 339 095 B1**
(45) Date of publication and mention of the grant of the patent: **15.09.2021**
(21) Application number: 17209875.8
(22) Date of filing: 21.12.2017
(51) Int. Cl.: B60Q 1/38, B60Q 1/50, B60Q 1/26, B60Q 1/32, G09F 13/22

(54) **SIGNALING SYSTEM OF A MANEUVER OF A ROAD VEHICLE**
SIGNALISIERUNGSSYSTEM EINES MANÖVERS EINES STRASSENFAHRZEUGES
SYSTÈME DE SIGNALISATION D'UNE MANOEUVRE D'UN VÉHICULE ROUTIER

(30) Priority: 21.12.2016 IT 201600129576
(43) Date of publication of application: 27.06.2018
(73) Proprietor: IVECO FRANCE S.A.S., 69200 Vénissieux (FR)
(72) Inventor: CODRON, Stephane, 69008 LYON (FR)
(74) Representative: Bongiovanni, Simone

(56) References cited:
- EP-A1- 1 512 615
- EP-A1- 3 061 650
- WO-A1-95/08818
- US-A- 6 018 295
- US-A1- 2006 038 671

## Description

This invention refers to signaling system of maneuvers (actuation), in particular a signaling system of maneuvers for a large road vehicle.

Large road vehicles, such as buses or coaches, include rear-view mirrors to assist the driver in lateral approach maneuvers or steering wheel rotation maneuvers.

However, all rear-view mirrors have a blind spot above which it is impossible for the driver to see what is happening in the proximity of the vehicle. For instance, during lateral approach maneuvers, cyclists or motorcyclists that are very close to the lateral wall of the vehicle may not be seen by the driver, which could possibly lead to an accident.

The direction indicators are normally used to warn about a vehicle maneuver but they have the disadvantage that under certain climatic conditions (for example when there is too much light or fog) they are not clearly visible. In addition, the driver may forget to activate them.

Examples of known signaling systems are disclosed in document US6018295 A.

Therefore, existing signaling systems should always be improved to increase safety during lateral approach maneuvers or when turning the road vehicles.

The invention aims to solve the aforementioned drawbacks.

The above-mentioned objectives are achieved by a signaling system according to claim 1.

Other features and advantages of the invention will become clearly apparent from the description below, which is given by way of a non-limiting example only, with reference to the accompanying drawings, in which:
- Figure 1 is a plan view of a vehicle, including a signaling system according to the present invention; and
- Figure 2 is a side view of the vehicle of Figure 1.

For the sake of clarity, the following non-exhaustive description refers to a bus, the description being suitable for application to other types of road vehicles.

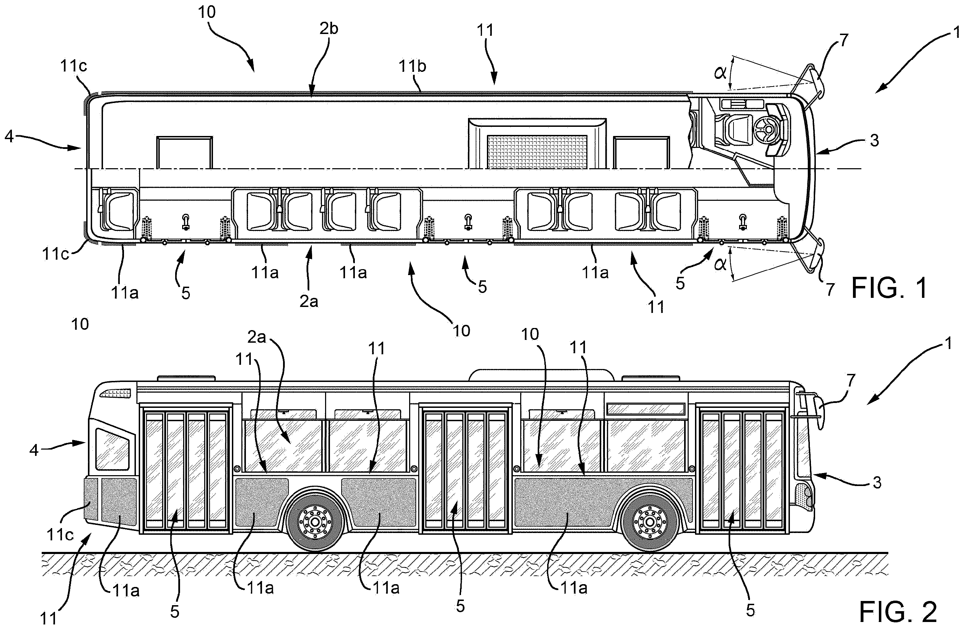

Figures 1 and 2 illustrate a conventional bus 1, which has two lateral walls 2a, 2b, a front wall 3 and a rear wall 4.

On a wall 2a of lateral walls 2a, 2b, the bus 1 comprises at least one door; in the case described three doors 5, a front door, an auxiliary door and a rear door.

The bus 1 also comprises a pair of rear view mirrors 7 configured to allow the bus driver 1 to have a rear view in order to maneuver the bus 1.
The rear view mirrors 7 include a blind spot α below, from which it is impossible for the driver to see.

The bus 1 includes a signaling system 10 configured to prominently display the maneuvers of the bus 1.

Effectively, the signaling system 10 includes stickers 11 applicable to walls 2a, 2b, 3, 4 of the bus 1. The stickers 11 are made from an electroluminescent material. An electroluminescent material is a material that emits light without a glare when it is subjected to an electric current or an electric field.

The stickers 11 may have any shape or color. Preferably, the stickers 11 should be of a vivid color, for example red, orange or yellow and they should cover a significant surface of one of the lateral walls 2a, 2b of the bus.

The thickness of the stickers should preferably be less than 2 mm so as to not substantially modify the side clearance profile of the vehicle 1, limited to 2.55 mm for a bus.

Preferably the stickers 11 may consist of a plurality of strips 11a substantially rectangular in shape, adhered along the line of the lateral wall 2a between the doors 5, a substantially rectangular continuous strip 11b stuck to the lateral wall 2b or even angular strips 11c adhered to one of the corners of the bus, for example between the lateral walls 2a, 2b and the rear wall 4.

The stickers 11 are connected to a control device (not illustrated) configured to activate them. Effectively, the control device can energize, for example at a voltage of 12 V or 24V, the stickers 11 in order to activate them.

According to the invention, the activation occurs automatically as soon as the driver turns the steering wheel for maneuverability or when the steering wheel is turned and exceeds a predetermined value.

Preferably, the stickers of one of the lateral walls 2a, 2b are activated if the steering wheel is turned towards this wall.

The control device may be connected to the ECU (Engine Control Unit) of the vehicle 1 or directly connected to the electrical devices for controlling the steering wheel.

From the above, the advantages of a signaling system 10 according to the present invention are evident.

The stickers 11 make it possible to make people aware of the maneuvers of the vehicle 1 in a more visible manner than the indicators, without increasing the side vehicle clearance profile and without a glare.

Furthermore, electroluminescent stickers 11 produce a light that is easier to see even in bad weather conditions.

According to the invention, the stickers 11 are activated on their own, without being activated by the driver, as they are activated simply when the steering wheel is turned.

Finally, it is clear that according to the present invention, the signaling system 10 may be subject to modifications and variants, which do however fall within the scope of protection defined by the claims.

For example, the logic of activation of the stickers 11 may be varied or as already stated, their shape, color or position may also be changed.

## Claims

1. A signaling system (10) of a maneuver of a road vehicle (1) **characterized by** comprising stickers (11) applicable to at least one (2a; 2b) of the outer lateral walls of said vehicle (1), the stickers being configured to light up when said vehicle (1) is performing a maneuver, said stickers (11) being made of a film of electroluminescent material and being activated by a control device configured to activate them;
wherein said control device is configured to automatically activate said stickers (11) when the steering wheel is turned.

2. The signaling system according to claim 1, in that said control device energizes said stickers (11) to activate them.

3. The system according to one of claims 1 or 2, **characterized in that** the stickers (11) consist of at least one strip (11a; 11c) adhering to a lateral wall (2a) of the vehicle (1) and at least one strip (11b; 11c) adhering to a lateral wall (2b) of the vehicle opposite the lateral wall (2a), said control device automatically activating said at least one strip (11a; 11b; 11c) when the steering wheel is turned in this direction.

## Patentansprüche

1. Ein Signalisierungssystem (10) eines Manövers eines Straßenfahrzeugs (1), **gekennzeichnet durch** Umfassen von Aufklebern (11), die an mindestens einer (2a; 2b) der äußeren Seitenwände des Fahrzeugs (1) angebracht werden können, wobei die Aufkleber so ausgeführt sind, dass sie aufleuchten, wenn das Fahrzeug (1) ein Manöver durchführt, wobei die Aufkleber (11) aus einem Film aus elektrolumineszentem Material hergestellt sind und durch eine Steuerung aktiviert werden, die ausgeführt ist, um sie zu aktivieren; wobei die Steuerung ausgeführt ist, um die Aufkleber (11) automatisch zu aktivieren, wenn das Lenkrad gedreht wird.

2. Signalisierungssystem nach Anspruch 1, **dadurch gekennzeichnet, dass** die Steuerung die Aufkleber (11) mit Energie versorgt, um sie zu aktivieren.

3. System nach einem der Ansprüche 1 oder 2, **dadurch gekennzeichnet, dass** die Aufkleber (11) aus mindestens einem Streifen (11a; 11c) bestehen, der an einer Seitenwand (2a) des Fahrzeugs (1) haftet, und mindestens einem Streifen (11b; 11c), der an einer der Seitenwand (2a) gegenüberliegenden Seitenwand (2b) des Fahrzeugs haftet, wobei die Steuerung automatisch den mindestens einen Streifen (11a; 11b; 11c) aktiviert, wenn das Lenkrad in seine Richtung gedreht wird.

## Revendications

1. Système de signalisation (10) d'une manœuvre d'un véhicule routier (1), **caractérisé en ce qu'**il comprend des autocollants (11) applicables sur au moins l'une (2a ; 2b) des parois latérales externes dudit véhicule (1), les autocollants étant configurés pour s'allumer lorsque ledit véhicule (1) réalise une manœuvre, lesdits autocollants (11) étant réalisés avec un film de matériau électroluminescent et étant activés par un dispositif de commande configuré pour les activer ;
dans lequel ledit dispositif de commande est configuré pour activer automatiquement lesdits autocollants (11) lorsque le volant est tourné.

2. Système de signalisation selon la revendication 1, en ce que ledit dispositif de commande alimente lesdits autocollants (11) pour les activer.

3. Système selon l'une des revendications 1 ou 2, **caractérisé en ce que** les autocollants (11) se composent d'au moins une bande (11a ; 11c) adhérant à une paroi latérale (2a) du véhicule (1) et d'au moins une bande (11b ; 11c) adhérant à une paroi latérale (2b) du véhicule opposée à la paroi latérale (2a), ledit dispositif de commande activant automatiquement ladite au moins une bande (11a ; 11b ; 11c) lorsque le volant est tourné dans cette direction.
